# EUROPÄISCHE PATENTANMELDUNG

(11) **EP 3 255 817 A1**
(43) Veröffentlichungstag der Anmeldung: **13.12.2017**
(21) Anmeldenummer: 16173029.6
(22) Anmeldetag: 06.06.2016
(51) Int. Cl.: H04B 10/116, H05B 33/08, H05B 37/02

(54) **LEUCHTE UND LEUCHTEN-SYSTEM**

(71) Anmelder: HSi Elektronik AG, 9200 Gossau (CH)
(72) Erfinder: HOFER, Tobias, 9000 St. Gallen (CH)
(74) Vertreter: Troesch Scheidegger Werner AG

(57) **Zusammenfassung**

Leuchte 10 mit
- mindestens einer LED 11
- einem Lichtausgang 21 für Ausgangs-LED-Licht 22 mit einem Beleuchtungslichtanteil und einem Ausgangs-Kommunikationslichtanteil,
- einer für einen empfangenen Kommunikationslichtanteil 23 empfindlichen Sensoreinheit 12,
- einer Informationsaufbringeinheit 14, die ausgangsseitig auf den Kommunikationslichtanteil des Ausgangs-LED-Lichts einwirkt,
- einer Informationsrückgewinnungseinheit 15, die eingangsseitig mit der Sensoreinheit 12 wirkverbunden ist, und
- einer Steuereinheit 13, die ausgangsseitig mit einem Eingang der Informationsaufbringeinheit 14 und eingangsseitig mit einem Ausgang der Informationsrückgewinnungseinheit 15 wirkverbunden ist.

Weiter ist die Erfindung auf ein Leuchten-System und ein Verfahren zum Betrieb des Leuchten-Systems gerichtet.

## Beschreibung

Die vorliegende Erfindung betrifft eine Leuchte, ein Leuchten-System und ein Verfahren zum Betrieb eines Leuchten-Systems.

Es ist bekannt, Leuchten, basierend auf mit Sensoren erfassten Zuständen der Umgebung der Leuchte, ein- und auszuschalten oder die Helligkeit der Leuchte anzupassen. Beispiele für derartige Sensoren sind Dämmerungsschalter, Bewegungsmelder, Helligkeitssensoren und Präsenzmelder. Bei grösseren Beleuchtungsanlagen mit mehreren Leuchten braucht es entweder für jede Leuchte entsprechende Sensoren oder Gruppen von Leuchten werden als ganze Gruppe ein- und ausgeschaltet resp. in ihrer Helligkeit angepasst. Dabei werden oftmals unbefriedigende Beleuchtungsresultate erzielt. Werden die beleuchteten Bereiche zu kleinräumig gesteuert, so können starke Hell-Dunkel-Übergänge resultieren, da beispielsweise nur gerade der Bewegungsmelder der nächstliegenden Leuchte eine in einem Raum anwesende Person erfasst. Umgekehrt führen grossräumig gewählte Bereiche zu übermässigem Energieverbrauch, beispielsweise wenn eine ganze Lagerhalle oder alle Quergänge zwischen Regalen ausgeleuchtet werden, sobald sich eine Person im Raum befindet.

Die Aufgabe der vorliegenden Erfindung besteht darin, eine Leuchte, ein Leuchten-System und ein Verfahren für den Betrieb eines Leuchten-Systems zur Verfügung zu stellen, welche die Nachteile des Stands der Technik beseitigen.

Erfindungsgemäss wird diese Aufgabe durch eine Leuchte gemäss Anspruch 1 gelöst.

Eine solche Leuchte umfasst mindestens eine LED (Light Emitting Diode, Leuchtdiode) und sie hat einen Lichtausgang für Ausgangs-LED-Licht. Das Ausgangs-LED-Licht hat einen Beleuchtungslichtanteil und einem Ausgangs-Kommunikationslichtanteil der Information enthält. Die Leuchte umfasst weiter eine für einen empfangenen Kommunikationslichtanteil empfindliche Sensoreinheit. Der empfangene Kommunikationslichtanteil mit der entsprechenden Information kann insbesondere auch von einer anderen Leuchte ausgesendet sein. Die Leuchte umfasst weiter eine Informationsaufbringeinheit, die ausgangsseitig auf den Kommunikationslichtanteil des Ausgangs-LED-Lichts einwirkt. Die Leuchte umfasst weiter eine Informationsrückgewinnungseinheit, die eingangsseitig mit der Sensoreinheit wirkverbunden ist. Zur Leuchte gehört auch eine Steuereinheit. Die Steuereinheit ist ausgangsseitig mit einem Eingang der Informationsaufbringeinheit und eingangsseitig mit einem Ausgang der Informationsrückgewinnungseinheit wirkverbunden. Damit kann in Funktion empfangener Information, Information dem gesendeten Ausgangs-Kommunikationslichtanteil aufgebracht werden.

Die erfindungsgemässe Leuchte ist somit zum drahtlosen Datenaustausch bzw. Informationsaustausch mit anderen Leuchten fähig. Somit ist es nicht notwendig, für den Datenaustausch ein drahtgebundenes Netzwerk oder ein Funknetzwerk aufzubauen. Dies ermöglicht insbesondere im Fall von Umbauten oder Nachrüstungen eine einfache Installation der Leuchten. Es ist nur eine Stromversorgung zur Verfügung zu stellen. Das Verlegen von weiteren Drähten ist nicht notwendig, um ein vernetztes Leuchten-System aufzubauen. Die erfindungsgemässe Leuchte kann auch an Orten eingesetzt werden, wo Funknetzwerke nicht möglich oder nicht zugelassen sind, beispielsweise im Umfeld von empfindlichen medizinischen Apparaten oder in Flugzeugen, da die drahtlose Kommunikation über Licht erfolgt.

Die LED kann insbesondere auch eine OLED (Organic Light Emitting Diode) sein. Der Kommunikationslichtanteil kann beispielsweise durch Modulation der Lichtintensität in einer für das Auge nicht wahrnehmbaren Frequenz erzeugt sein. Ab ca. 100 Hz ist auch bei bewegten beleuchteten Objekten oder beim Drehen des Kopfs kaum mehr ein Flackern zu erkennen. LED's können ohne weiteres im kHz bis MHz-Bereich moduliert werden. Im Fall von RGB-LED's kann sich der Kommunikationslichtanteil auch auf eine Lichtintensität einer der Farben Rot, Grün oder Blau beziehen. Der Kommunikationslichtanteil kann in Bezug auf seine Lichtintensität deutlich schwächer sein, als eine typische für Beleuchtungszwecke eingesetzte Lichtintensität. Damit kann Datenübertragung über den Kommunikationslichtanteil auch dann erfolgen, wenn der Beleuchtungslichtanteil auf null gesetzt ist.

Weiter erfindungsgemässe Ausführungsformen der Leuchte ergeben sich aus den Merkmalen der Ansprüche 2 bis 17. Unter weiteren Aspekten bezieht sich die Erfindung auf ein Leuchten-System nach Ansprüchen 18 und 19 sowie auf Verfahren zum Betrieb des Leuchten-Systems nach Ansprüchen 20 bis 27.

In einer Ausführungsform der Leuchte, die mit noch zu nennenden Ausführungsformen kombiniert werden kann, falls nicht widersprüchlich, ist die Sensoreinheit gleichzeitig Helligkeitssensor für Umgebungslicht und Empfänger für Kommunikationslicht.

In dieser Ausführungsform wird dieselbe Sensoreinheit auf effiziente Weise für zwei Funktionen eingesetzt. Die Unterscheidung zwischen Helligkeit und Kommunikationslichtanteil kann in der Rückgewinnungseinheit erfolgen. Die Helligkeit am Standort der Leuchte ist einer der wichtigsten Faktoren bei der Einstellung der Stärke des Beleuchtungslichtanteils. Mit dieser Ausführungsform ist diese Information ohne wesentlichen Zusatzaufwand verfügbar.

In einer Ausführungsform der Leuchte, die mit oben genannten und mit noch zu nennenden Ausführungsformen kombiniert werden kann, falls nicht widersprüchlich, ist die Informationsrückgewinnungseinheit so ausgebildet, dass der Ausgangs-Kommunikationslichtanteil bei der Rückgewinnung übergangen wird.

Dies ermöglicht ein fehlerarmes Rückgewinnen von Signalen, die nicht von der Leuchte selber abgegeben werden, die aber gegebenenfalls mit dem eigenen Ausgangs-Kommunikationslichtanteil überlagert an der Sensoreinheit empfangen werden.

In einer Variante der zuletzt genannten Ausführungsform ist eine zusätzliche, auf Kommunikationslicht empfindliche Sensoreinheit auf die LED gerichtet und ausgangsseitig mit der Informationsrückgewinnungseinheit wirkverbunden.

In dieser Variante wird eine besonders effektive Eigenlichtkompensation erreicht. Beispielsweise kann die zusätzliche Sensoreinheit ausgangsseitig mit dem Eingang eines Differenzverstärkers verbunden sein, der an einem anderen Eingang mit der besagten Sensoreinheit, welche vor allem Kommunikationslicht von anderen Leuchten empfängt, verbunden ist. Auf diese Weise kann ein Signal erzeugt werden, das weitgehend frei von den Signalen im von der Leuchte selber abgegebenen Kommunikationslicht ist. Die zusätzliche Sensoreinheit kann beispielsweise eine Photodiode umfassen.

In einer Ausführungsform der Leuchte, die mit oben genannten und mit noch zu nennenden Ausführungsformen kombiniert werden kann, falls nicht widersprüchlich, ist der Ausgang der Informationsaufbringeinheit über eine LED-Treibereinheit mit dem Lichtausgang wirkverbunden.

Die Wirkverbindung erfolgt beispielsweise durch Modulation des Stroms in der LED gemäss einem Modulationsmuster, welches von der Informationsaufbringeinheit vorgegeben wird. Damit wird die Lichtintensität beim Lichtausgang entsprechend beeinflusst.

In einer Ausführungsform der Leuchte, die mit oben genannten und mit noch zu nennenden Ausführungsformen kombiniert werden kann, falls nicht widersprüchlich, sind zumindest die Steuereinheit, die Informationsrückgewinnungseinheit und die Informationsaufbringeinheit in einem gemeinsamen Gehäuse angeordnet.

Das gemeinsame Gehäuse kann ein Gehäuse der Leuchte sein. Steuereinheit, Informationsrückgewinnungseinheit und Informationsaufbringeinheit können auch im Gehäuse eines integrierten elektronischen Bausteins angeordnet sein.

In einer Ausführungsform der Leuchte, die mit oben genannten und mit noch zu nennenden Ausführungsformen kombiniert werden kann, falls nicht widersprüchlich, umfasst die Steuereinheit einen Mikroprozessor.

Bevorzugt ist mit dem Mikroprozessor auch eine Speichereinheit zum Speichern eines Programms und/oder von Parametern für den Betrieb der Steuereinheit verbunden.

In einer Ausführungsform der Leuchte, die mit oben genannten und mit noch zu nennenden Ausführungsformen kombiniert werden kann, falls nicht widersprüchlich, umfasst die Sensoreinheit mindestens eine Photodiode, bevorzugt in Kombination mit einem Transimpedanz-Wandler.

Diese Ausführungsform ermöglicht sehr empfindliche Messungen der Lichtintensität und damit auch die Berücksichtigung von empfangenem Kommunikationslichtanteil mit schwacher Intensität. Diese Ausführungsform ist gut geeignet, die Sensoreinheit gleichzeitig als Helligkeitssensor für Umgebungslicht und als Empfänger für Kommunikationslicht betrieben werden.

In einer Ausführungsform der Leuchte, die mit oben genannten und mit noch zu nennenden Ausführungsformen kombiniert werden kann, falls nicht widersprüchlich, ist ein lichtundurchlässiges Element zwischen Sensoreinheit und Lichtausgang vorgesehen.

Ein solches lichtundurchlässiges Element schirmt die Sensoreinheit gegen direktes Licht aus dem Lichtausgang ab und verhindert damit, dass empfangener Kommunikationslichtanteil von ausserhalb überstrahlt wird, z.B. durch den von der Leuchte selbst ausgestrahlten Kommunikationslichtanteil.

In einer Ausführungsform der Leuchte, die mit oben genannten und mit noch zu nennenden Ausführungsformen kombiniert werden kann, falls nicht widersprüchlich, ist die Informationsaufbringeinheit als Modulationseinheit für die für die Amplitudenmodulation von Lichtintensität mit einem modulierten Signal ausgelegt und die Informationsrückgewinnungseinheit ist als Demodulationseinheit für das modulierte Signal ausgelegt.

Mit einem modulierten Signal als Träger der codierten Information wird auch bei niedriger Intensität des Beleuchtungslichtanteils ein weitgehend störungsfreier Betrieb erreicht.

In einer Ausführungsform der Leuchte, die mit oben genannten und mit noch zu nennenden Ausführungsformen kombiniert werden kann, falls nicht widersprüchlich, umfasst die Modulationseinheit einen Frequenzumtastungs-Modulator und die Demodulationseinheit umfasst einen Frequenzumtastungs-Demodulator.

Die Frequenzumtastungs-Modulation (frequency shift keying, FSK) hat sich für die Anwendung von Datenübertragung zwischen Leuchten als besonders robuste Modulationsart erwiesen. Dies bedeutet, dass mit dieser Modulationsart besonders grosse Übertragungsdistanzen erreicht werden können.

In einer Ausführungsform der Leuchte, die mit oben genannten und mit noch zu nennenden Ausführungsformen kombiniert werden kann, falls nicht widersprüchlich, umfasst die Modulationseinheit einen Amplitudenumtastungs-Modulator und die Demodulationseinheit umfasst einen Amplitudenumtastungs-Demodulator.

Die Amplitudenumtastungs-Modulation (amplitude shift keying, ASK) kann mit besonders kostengünstigen Bauelementen verwirklicht werden. Die Modulationseinheit für Amplitudenumtastungs-Modulation kann beispielsweise besonders einfach als Modulationseinheit für Ein-Aus-Kodierung (on-off keying, OOK) implementiert sein.

In einer Ausführungsform der zuletzt genannten Ausführungsform der Leuchte umfasst der Frequenzumtastungs-Demodulator in Serieschaltung die Elemente:
- Bandpassfilter,
- Amplitudenbegrenzer,
- Phasenregelschleife (phase-locked loop, PLL),
- Tiefpassfilter und
- Schmitt-Trigger.

In dieser Anordnung wird ein einfach und kostengünstig zur implementierender Frequenzumtastungs-Demodulator, der direkt ein digitales Ausgangssignal liefert, realisiert.

In einer Ausführungsform der Leuchte, die mit oben genannten und mit noch zu nennenden Ausführungsformen kombiniert werden kann, falls nicht widersprüchlich, umfasst die Leuchte Mittel zur Signalpegelmessung des Kommunikationslichtanteils.

Bei den Mitteln zur Signalpegelmessung des Kommunikationslichtanteils kann es sich beispielsweise um ein digitales Voltmeter handeln. Einem digitalen Voltmeter kann beispielsweise ein Spitzenwert-Gleichrichter vorgeschaltet sein. Die bei der Signalpegelmessung ermittelten Messwerte können beispielsweise als Grundlage für die Ermittlung einer Distanz zwischen der empfangenden und der aussendenden Leuchte verwendet werden.

In einer Ausführungsform der Leuchte, die mit oben genannten und mit noch zu nennenden Ausführungsformen kombiniert werden kann, falls nicht widersprüchlich, umfasst die Leuchte Mittel zur Variation der Intensität des Beleuchtungslichtanteils durch Pulsweitenmodulation.

Bei einer Leuchte gemäss dieser Ausführungsform kann beispielsweise in rascher Folge zwischen 0% und 100% der maximalen Helligkeit der LED hin und her geschaltet werden, wobei der Anteil der Zeitintervalle mit 100% der maximalen Helligkeit die wahrgenommene Intensität der Beleuchtung festlegt. Das Auge nimmt nur die zeitlich gemittelte Intensität wahr, sobald die Frequenz des Umschaltens genügend gross (grösser als ca. 100 Hz) ist.

In einer Ausführungsform der Leuchte, die mit oben genannten und mit noch zu nennenden Ausführungsformen kombiniert werden kann, falls nicht widersprüchlich, ist zumindest ein Sensor aus der Liste:
- Bewegungsmelder,
- Präsenzmelder,
- Überfahrschalter,
- Trittmatte,
- Mikrofon,
- Videokamera,
- Helligkeitssensor
mit der Steuereinheit wirkverbunden.

Mit der Auswertung von Signalen aus diesem Sensor können zusätzliche Informationen zum Bedarf von Beleuchtung erhoben werden, die mit der für empfangenen Kommunikationslichtanteil empfindlichen Sensoreinheit nicht erfasst werden können. Derartige Sensoren ermöglichen das Erfassen der Anwesenheit von Personen in einem Raum oder auf einer bestimmten Fläche, das Durchschreiten einer Tür oder das Überfahren einer bestimmten Stelle. Die Steuereinheit kann aufgrund dieser Informationen sowohl den Beleuchtungslichtanteil der zugehörigen Leuchte anpassen, als auch über den Kommunikationslichtanteil die Informationen an anderen Leuchten übermitteln.

In einer Ausführungsform der Leuchte, die mit oben genannten und mit noch zu nennenden Ausführungsformen kombiniert werden kann, falls nicht widersprüchlich, umfasst die Leuchte Mittel zum Empfangen und/oder Senden von Daten über ein drahtgebundenes Netzwerk und/oder über Funkverbindung.

In dieser Ausführungsform können die Vorteile der Datenübertragung über Kommunikationslicht mit anderen bekannten Mitteln der Datenübertragung kombiniert werden. Die Einbettung erfindungsgemässer Leuchten in ein existierendes, auf draht- oder funkbasierter Kommunikation beruhendes Netzwerk ist mit dieser Ausführungsform ohne weiteres möglich.

In einem weiteren Aspekt bezieht sich die Erfindung auf ein Leuchten-System.

Ein solches Leuchten-System umfasst mindestens zwei erfindungsgemässe Leuchten. Dabei ist der Kommunikationslichtanteil im Ausgangs-LED-Licht einer ersten Leuchte der empfangene Kommunikationslichtanteil mindestens einer anderen Leuchte.

Das erfindungsgemässe Leuchten-System ermöglicht drahtlose Übertragung von Befehlen oder Daten von der ersten Leuchte auf andere Leuchten im Leuchten-System. Durch die Möglichkeit von Datenübertragung im Betrieb ergeben sich als Vorteile, dass weniger Sensoren, z.B. zum Erfassen von Anwesenheit von Personen, nötig sind und dass Energie gespart werden kann. Vorteilhafte Beleuchtungsschemas mit weniger harten Übergänge von Hell zu Dunkel werden möglich. Beispielsweise kann die erste Leuchte in einem Leuchtsystem mit einem Bewegungsmelder verbunden sein. Das Erfassen einer Person kann an benachbarte Leuchten via Kommunikation durch Licht übermittelt werden. Das erfindungsgemässe Leuchten-System ermöglicht einen Master/Slave-Betrieb mit optisch übermittelten Befehlen.

In einer Ausführungsform des Leuchten-Systems ist der Ausgangs-Kommunikationslichtanteil im Ausgangs-LED-Licht der anderen Leuchte der empfangene Kommunikationslichtanteil der ersten Leuchte.

Diese Ausführungsform ermöglicht bidirektionalen Datenaustausch zwischen Leuchten im System. Helligkeitsänderungen, Bewegungen von Personen, etc. können in dieser Ausführungsform von einer der anderen Leuchte zur ersten Leuchte gemeldet werden.

In einem weiteren Aspekt bezieht sich die Erfindung auf Verfahren zum Betrieb eines Leuchten-Systems.

In einem Verfahren zum Betrieb eines erfindungsgemässen Leuchten-Systems werden in der ersten Leuchte des Leuchten-Systems
a) Statusinformationen der Steuereinheit bevorzugt in Form digitaler Signale an die Informationsaufbringeinheit übermittelt und im Ausgangs-Kommunikationslichtanteil ausgesendet.

Statusinformationen der Steuereinheit können beispielsweise die aktuelle eingestellte Helligkeit der Leuchte, eine gemessene Helligkeit der Umgebung, den Status eines Präsenzmelders oder eine Uhrzeit beinhalten.

In einer Ausführungsform des Verfahrens werden in den anderen Leuchten des Leuchten-Systems
b) Information aus am Ausgang des Sensors auftretenden Signale rückgewonnen und von der Steuereinheit verarbeitet und
c) auf Grundlage der rückgewonnenen Information die Helligkeit des Beleuchtungslichtanteils vergrössert, verkleinert oder konstant gehalten.

In den Verfahrensschritten gemäss dieser Ausführungsform des Verfahrens werden Befehle aus der ersten Leuchte umgesetzt, respektive von der ersten Leuchte versendete Informationen zur Steuerung von anderen Leuchten verwendet.

In einem weiteren Verfahren zum Betrieb eines erfindungsgemässen Leuchten-Systems werden in Leuchten des Leuchten-Systems
a) Statusinformationen der Steuereinheit bevorzugt in Form digitaler Signale an die Informationsaufbringeinheit übermittelt und im Ausgangs-Kommunikationslichtanteil ausgesendet,
b) Information aus am Ausgang des Sensors auftretenden Signale rückgewonnen und von der Steuereinheit verarbeitet und
c) auf Grundlage der rückgewonnenen Information die Helligkeit des Beleuchtungslichtanteils vergrössert, verkleinert oder konstant gehalten.

In dieser Ausführungsform übernehmen Leuchten sowohl die Rolle des Senders als auch des Empfängers von Daten.

In einer Ausführungsform des Verfahrens wird im Schritt b) eine Signalpegelmessung an den rückgewonnenen Signalen durchgeführt und der ermittelte Signalpegel wird in ein Mass für eine Distanz zu einer Leuchte, welche die Quelle der rückgewonnenen Signale ist, übersetzt.

Mit dieser Ausführungsform werden intelligente Beleuchtungssysteme möglich, die ohne Vorkonfiguration die Distanzen zwischen Leuchten eines Leuchten-Systems berücksichtigen können. So kann beispielsweise im Fall, dass eine erste Leuchte über einen Bewegungsmelder eingeschaltet wird, eine entsprechend Statusinformation der ersten Leuchte übermittelt werden. Leuchten zum Beispiel näher als 3 m werden beispielsweise zu 50% eingeschaltet, Leuchten im Abstand bis zu 6 m mit 10%.

In einer Ausführungsform der Verfahren werden im Schritt b) am Ausgang der Sensoreinheit auftretende Signale demoduliert und in digitale Signale umgewandelt.

Digitale Signale ermöglichen einfache und flexible Weiterverarbeitung in der Steuereinheit.

In einer Ausführungsform der zuletzt genannten Ausführungsform der Verfahren wird im Schritt b) eine Messung eines Bit-Jitters an den digitalen Signalen durchgeführt und der ermittelte Bit-Jitter in ein Mass für eine Distanz zu einer Leuchte, welche die Quelle der rückgewonnenen Signale ist, übersetzt.

Beim Bit-Jitter der digitalen Signale handelt sich um eine zeitliche Variation in der exakten Lage der Umschaltflanke zwischen empfangenen Bits in der Grössenordnung eines kleinen Bruchteils des für das Senden eines einzelnen Bits vorgesehen Zeitintervalls. Dieser Bit-Jitter kann beispielsweise durch Vergleich mit einem Referenzsignal einer Mikroprozessor-Clock in der Steuereinheit ermittelt werden. Der Bit-Jitter wird grösser, wenn der Abstand der Leuchten gross ist und die Signalamplitude bei der empfangenden Leuchte kleiner wird. Bei dieser Ausführungsform des Verfahrens handelt es sich um eine alternative Möglichkeit zur Bestimmung einer Distanz zwischen Leuchten im Leuchten-System und ermöglicht gleichermassen die oben erwähnten intelligenten Beleuchtungssysteme. In dieser Ausführungsform muss nicht auf eine bekannte Signalamplitude des gesendeten Signals abgestützt werden.

In einer Ausführungsform der erfindungsgemässen Verfahren, die mit allen genannten Ausführungsformen kombinierbar ist, falls nicht widersprüchlich, werden durch Anwendung mindestens eines der Verfahren
- Frequenzmultiplexverfahren,
- Codemultiplexververfahren,
- synchrones oder asynchrones Zeitmultiplexverfahren Kommunikationskanäle zwischen je einem Paar von Leuchten im Leuchten-System etabliert.

In dieser Ausführungsform wird ermöglicht, dass zwischen Leuchten im gleichen Raum oder nahe benachbarten Leuchten, Datenaustausch möglich ist, ohne dass die einzelnen Kommunikationslichtanteile sich gegenseitig stören.

In einer Ausführungsform der erfindungsgemässen Verfahren, die mit allen genannten Ausführungsformen kombinierbar ist, falls nicht widersprüchlich, empfangen und/oder senden Leuchten im Leuchten-System über ein drahtgebundenes Netzwerk und/oder über Funkverbindung Daten.

In dieser Ausführungsform des Verfahrens erfolgt der Datenaustausch bzw. Informationsaustausch sowohl über Kommunikationslicht als auch über Draht oder über Funk wobei sich die verschiedenen Kanäle zum Datenaustausch ergänzen. Mit dieser Ausführungsform des Verfahrens kann beispielsweise die für die Beleuchtungssituation relevante Distanzinformation aus dem Kommunikationslichtanteil gewonnen werden. So kann beispielsweise erkannt werden, dass zwei durch eine undurchsichtige, aber für Radiowellen durchlässige Wand getrennte Leuchten beleuchtungstechnisch weit auseinanderliegen. Eine besonders einfache, beziehungsweis automatische Adressierung für ein drahtgebundenes oder funkbasiertes Netzwerk wird basierend auf der aus dem Kommunikationslicht gewonnenen Distanzinformation möglich. Ein intelligentes Schwarmverhalten des Leuchten-Systems wird in dieser Ausführungsform des Verfahrens ermöglicht.

Ausführungsbeispiele der vorliegenden Erfindung werden nachstehend anhand von Figuren noch näher erläutert. Es zeigen
Fig. 1 eine erfindungsgemässe Leuchte ;
Fig. 2 in Fig. 2a) und Fig.2.b) je eine Ausführungsform der Leuchte;
Fig. 3 ein erfindungsgemässes Leuchtensystem;
Fig. 4 ein erfindungsgemässes Leuchtensystem;
Fig. 5 Details einer Ausführungsform mit Demodulationseinheit und Helligkeitssensor;
Fig. 6 den zeitlichen Ablauf eines Modulationsverfahrens gemäss einer Ausführungsform;
Fig. 7 den zeitlichen Ablauf eines Modulationsverfahrens gemäss einer weiteren Ausführungsform;
Fig. 8 den zeitlichen Ablauf eines Modulationsverfahrens gemäss einer weiteren Ausführungsform.

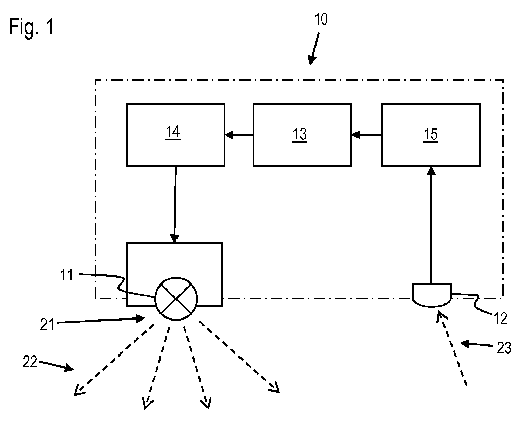

In Fig. 1 ist stark vereinfacht und schematisch eine erfindungsgemässe Leuchte gezeigt. Die Leuchte 10 umfasst erfindungsgemäss eine LED 11 als Leuchtmittel. Aus einem Lichtausgang 21 wird das Licht der LED in die Umgebung der Leuchte abgestrahlt. Das am Lichtausgang 21 austretende Ausgangs-LED-Licht 22 umfasst einen Beleuchtungslichtanteil und einen Kommunikationslichtanteil. Die Leuchte umfasst weiter eine Sensoreinheit 12, eine Informationsrückgewinnungseinheit 15, eine Steuereinheit 13 und eine Informationsaufbringeinheit 14. Pfeile zeigen Wirkverbindungen zwischen den genannten Einheiten an. Die Pfeilrichtung zeigt die Richtung des Informationsflusses an. Dabei verläuft der Pfeil jeweils von einem Ausgang einer Einheit zu einem Eingang einer anderen Einheit. Empfangener Kommunikationslichtanteil 23 trifft auf die Sensoreinheit 12.

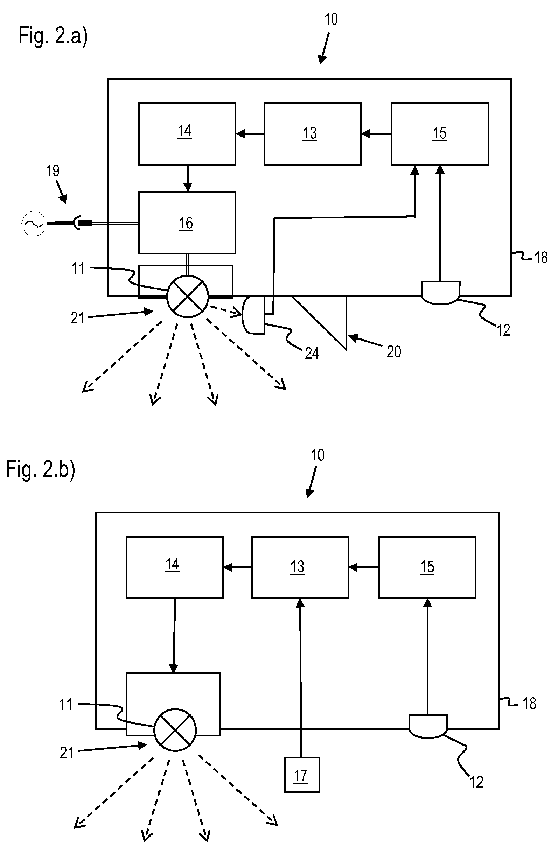

In Fig. 2.a) ist eine Ausführungsform der Leuchte stark vereinfacht und schematisch dargestellt. In dieser Ausführungsform ist eine LED-Treibereinheit 16 zwischen eine Stromversorgung 19 und die LED 11 geschaltet, deren Licht am Lichtausgang 21 für LED-Licht in die Umgebung abgestrahlt wird. Die Informationsaufbringeinheit 14 ist mit der LED-Treibereinheit 16 wirkverbunden. In dieser Ausführungsform kann zum Beispiel der Strom in der LED 11 moduliert werden. Die Stromversorgung 19 ist hier schematisch als Steckerverbindung zu einer externen Stromversorgung dargestellt. Eine interne Stromversorgung der Leuchte, beispielsweise durch eine Batterie, ist ebenfalls denkbar. Ein lichtundurchlässiges Element 20 ist zwischen dem Lichtausgang 21 und der Sensoreinheit 12 angebracht, sodass Licht nicht auf direktem Weg vom Lichtausgang 21 zur Sensoreinheit 12 gelangen kann. Diese Abschirmung der Sensoreinheit gegen direktes Licht aus dem Lichtausgang ist in diesem Fall am Gehäuse 18 der Leuchte angebracht. Informationsrückgewinnungseinheit 15, Steuereinheit 13 und Informationsaufbringeinheit 14 befinden sich im Gehäuse 18. Eine zusätzliche, ebenfalls für Kommunikationslicht empfindliche, Sensoreinheit 24 ist auf die LED 11 gerichtet und ist ausgangsseitig mit der Informationsrückgewinnungseinheit 15 wirkverbunden. Durch Differenzbildung von geeignet gewichteten Signalen aus den Sensoreinheiten 12 und 24 kann in dieser Anordnung auch indirekt von der LED 11 zur Sensoreinheit 12 gelangendes Kommunikationslicht unterdrückt werden.

In Fig. 2.b) ist eine weitere Ausführungsform der Leuchte stark vereinfacht und schematisch dargestellt. In dieser Ausführungsform ist zusätzlich zur Sensoreinheit 12 ein Sensor 17 mit der Steuereinheit 13 wirkverbunden. Bei diesem zusätzlichen Sensor kann es sich beispielsweise um einen Bewegungsmelder, einen Präsenzmelder, einen Überfahrschalter, eine Trittmatte, ein Mikrofon oder eine Videokamera handeln. Der Sensor 17 ist ausserhalb des Gehäuses 18 angebracht. Er kann dazu verwendet werden, für den Bedarf an Beleuchtung relevante Daten aus der Umgebung der Leuchte zu erfassen und an die Steuereinheit weiterzuleiten.

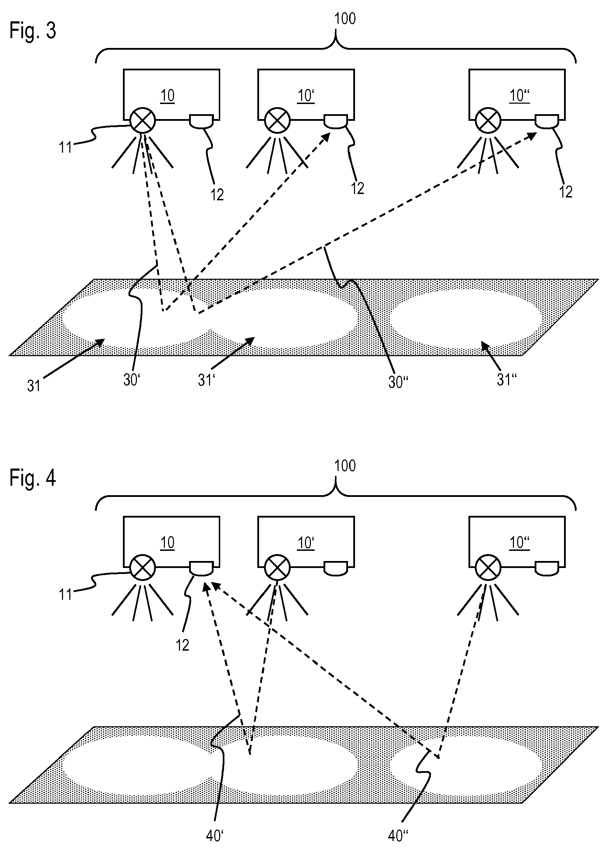

In Fig. 3 ist ein erfindungsgemässes Leuchten-System stark vereinfacht und schematisch dargestellt. Zum Leuchten-System 100 gehören Leuchten 10, 10', 10", die in der vorliegenden Darstellung eingeschaltet sind und mit dem ausgestrahlten LED-Licht die angedeuteten Gebiete 31, 31', 31" ausleuchten. Entlang den beispielhaft eingezeichneten Pfaden 30' und 30" gelangt Ausgangs-Kommunikationslichtanteil aus dem Ausgangs-LED-Licht der Leuchte 10 zu den Sensoreinheiten 12 der Leuchte 10' resp. 10" und wird dort empfangen. Aus Gründen der Übersichtlichkeit ist jeweils nur ein einziger der möglichen Pfade des Kommunikationslichtanteils eingezeichnet. Durch Streuung und Spiegelung an Böden, Wänden, etc. ist aber jeweils eine Vielzahl von Pfaden wirksam. Durch die grössere Distanz zwischen der Leuchte 10 und der Leuchte 10" im Vergleich zur Distanz zwischen der Leuchte 10 und der Leuchte 10' wird der im Sensor 12 der Leuchte 10" empfangene Kommunikationslichtanteil, der von Leuchte 10 stammt, schwächer sein, d.h. einen geringeren Signalpegel aufweisen, als der im Sensor 12 der Leuchte 10' empfangene Kommunikationslichtanteil und im Fall der Übertragung von digitalen Signalen mit einem erhöhten Bit-Jitter behaftet sein. Dies wird in einer Ausführungsform des Verfahrens zum Betrieb des Leuchten-Systems ausgenutzt, um ein Mass für eine Distanz zu ermitteln. Basierend auf diesem Mass für eine Distanz kann im Betrieb beispielsweise die Steuereinheit der direkt benachbarten Leuchte 10' auf einen Befehl der Leuchte 10 zur Änderung der Helligkeit mit einer Anpassung der Helligkeit der Leuchte 10' reagieren, während die entfernte Leuchte 10" nicht auf den Befehl reagiert. Die Leuchte 10' könnte beispielsweise mit 100% oder nur mit 50% des maximalen Beleuchtungslichtanteils einschalten, je nach Abstand. Diese Reaktionen können von den jeweiligen Steuereinheiten autonom durchgeführt werden. Eine vorgängige Konfiguration der Leuchten, wie beispielsweise ein Festlegen, dass die Leuchten 10 und 10' zu einer Leuchtengruppe gehören, die gemeinsam geschaltet wird, ist nicht notwendig.

In Fig. 4 ist eine Ausführungsform des Leuchten-Systems dargestellt, bei dem Kommunikationslichtanteil im Ausgangs-LED-Licht der Leuchten 10' und 10" der empfangene Kommunikationslichtanteil der Leuchte 10 ist. Die hier dargestellte Übertragungsrichtung kann beispielsweise für einen einzelnen Verfahrensschritt eines Betriebsverfahrens des Leuchten-Systems gelten. Die hier gezeigte Ausführungsform des Leuchten-Systems kann in einem anderen Zeitpunkt auch mit Übertragungsrichtungen von Kommunikationslicht betrieben werden, wie in Fig. 3 dargestellt. Beispielhaft sind Übertragungspfade 40', 40" des Ausgangs-Kommunikationslichtanteil der Leuchten 10' resp. 10" zur Leuchte 10 eingezeichnet.

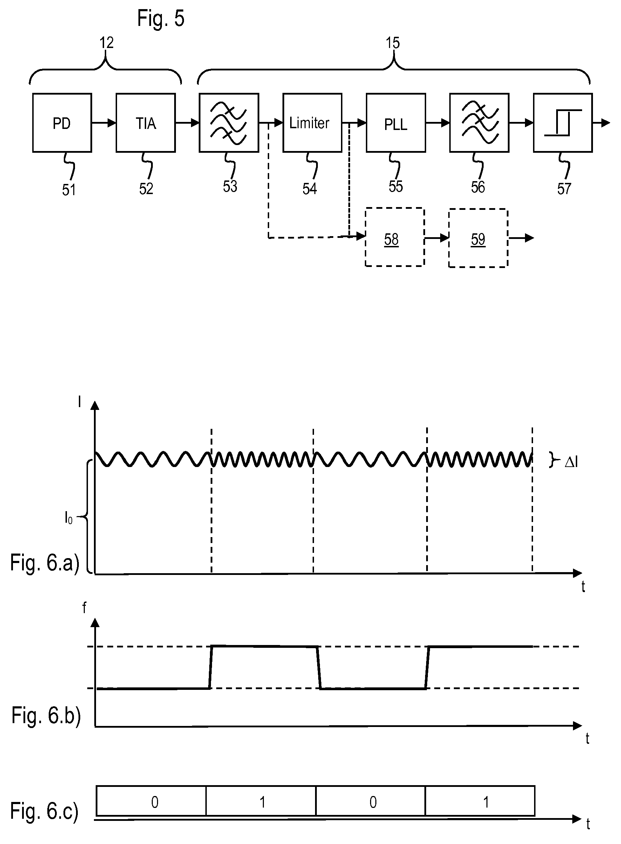

In Figur 5 sind als Blockschaltbild Sensoreinheit 12 und Informationsrückgewinnungseinheit 15 einer Ausführungsform der Leuchte dargestellt. In dieser Ausführungsform ist die Sensoreinheit ein Helligkeitssensor und die Informationsrückgewinnungseinheit ist ein Frequenzumtastungs-Demodulator (frequency shift keying, FSK-Demodulator). Das Licht wird über die Photodiode empfangen und mit einem Transimpedanzwandler 52 (transimpedance amplifier, TIA) in ein Spannungssignal umgewandelt. Dieses Spannungssignal wird durch einen Bandpass-Filter 53 gefiltert, gegebenenfalls verstärkt und limitiert. Ein als Demodulator betriebener Phase-Locked-Loop-(PLL-)Baustein 55 wandelt die momentan anliegende Frequenz in eine korrespondierende DC Spannung um. Dieses Signal wird nochmals durch ein Tiefpass 56 gefiltert und mit einem Schmitt-Trigger 57 in ein digitales Signal umgewandelt. Mit Pfeilen ist der Signalweg von der Photodiode 51 bis zum Ausgang der Demodulationseinheit, wo das Signal in digitaler Form vorliegt, angezeigt.

Die Photdiode 51 kann beispielsweise eine Silizium-pin-Photodiode (positive-intrinsic-negativ photo diode), beispielsweise eine BPX61 sein. Der Bandpassfilter kann beispielsweise eine Durchlassfrequenz von f0 = 10.5 kHz und eine Bandbreite von 5 kHz aufweisen. Der Verstärker/Limiter 54 kann beispielsweise einen Verstärkungsfaktor von 100 und eine Limitierung auf +/-1 Volt umsetzen. Der PLL-Baustein 55 kann beispielsweise als CD4046 implementiert sein. Eine mögliche Umsetzung des Tiefpassfilters 56 ist ein Butterworth-Filter 2'ter Ordnung mit einer Grenzfrequenz von 1 kHz.

Als optionale Ergänzung zur Informationsrückgewinnungseinheit 15 sind mit strichlierten Linien Mittel zur Signalpegelmessung des Kommunikationslichtanteils eingezeichnet. Ein Signal wird nach dem Bandpassfilter 53, oder alternativ nach dem Amplitudenbegrenzer (Limiter) 54, abgegriffen und einem Spitzenwert-Gleichrichter 58 zugeführt. Dessen Ausgangssignal wird durch ein digitales Voltmeter 59 gemessen. In dieser Anordnung wird am Ausgang von 59 ein digitaler Messwert für den Signalpegel des Kommunikationslichtanteils ausgegeben. Dieser digitale Messwert kann beispielsweise der Steuereinheit zugeführt und von dieser verarbeitet werden.

Fig. 6 zeigt schematisch ein Beispiel für den zeitlichen Ablauf eines Modulationsverfahrens, das von einer Ausführungsform der Leuchte mit einem Frequenzumtastungsmodulator ausgeführt werden kann.

Fig. 6.a) zeigt über der Zeitachse t den Verlauf der Lichtintensität I. Die Lichtintensität I₀ entspricht dem Beleuchtungslichtanteil. Die Amplitude der Lichtintensität I ist mit einem Signal moduliert, welches die zu übertragende Information codiert. Dieses Signal hat eine Amplitude ΔI. Es handelt sich um den Kommunikationslichtanteil. Das Signal ist im gezeigten Fall ein Sinus-Signal mit je für einen Zeitabschnitt konstanter Frequenz. Die Zeitabschnitte sind durch senkrechte, strichlierte Linien angezeigt. Die Zeitachse entspricht den Zeitachsen in Fig. 6.b) und Fig. 6.c). In einem Zeitabschnitt wird ein Bit codiert. Ein solcher Zeitabschnitt kann beispielsweise eine Millisekunde lang sein. In diesem Fall wird eine Übertragungsrate von 1 kBit pro Sekunde erreicht, was für die vorliegende Anwendung bereits ausreicht. LED's erlauben deutliche grössere Modulationsfrequenzen, sodass prinzipiell auch Datenübertragungsraten im Bereich von Mbit pro Sekunde erreichbar sind.

Fig. 6.b) zeigt den zeitlichen Verlauf der Frequenz f des Sinus-Signals im Kommunikationslichtanteil gemäss Fig. 6.a). Die Frequenz ist in jedem Zeitabschnitt konstant, sie wechselt zwischen einem hohen und einem tiefen Wert für die Frequenz.

Fig. 6.c) zeigt die Bitfolge, die im Signal gemäss Fig. 6.a) resp. dem zeitlichen Verlauf der Frequenz gemäss Fig. 6.c) codiert ist. In diesem Fall codiert die tiefe Frequenz eine "0" und die hohe Frequenz eine "1".

Im dem in Fig. 6.a) dargestellten Fall schliesst sich das Signal an den Grenzen der Zeitabschnitte kontinuierlich an das Signal im benachbarten Zeitabschnitt an, d.h. es wird sogenanntes ,continuous-phase frequency-shift keying' (CPFSK) angewandt. Aus Darstellungsgründen sind die beiden Frequenzen in Fig. 6.a) sehr unterschiedlich gewählt worden. Für praktische Anwendungen genügen kleine Frequenzunterschiede um digitale Informationen zu codieren.

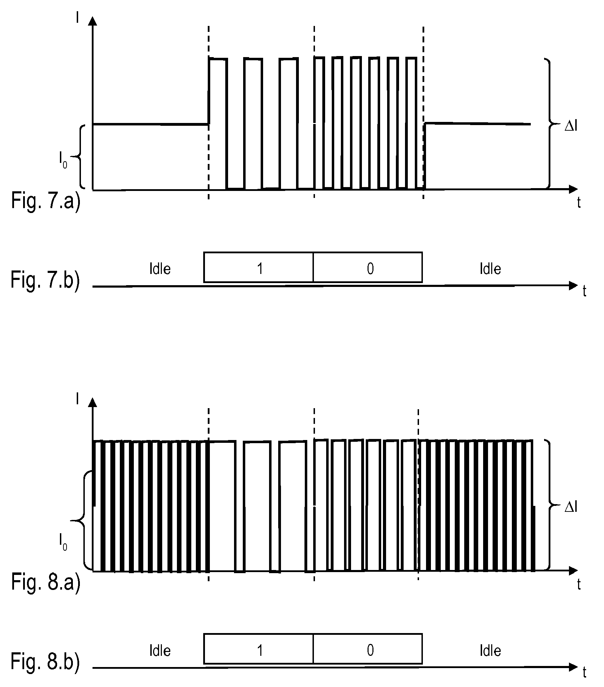

Fig. 7 zeigt in Fig. 7.a) und Fig. 7.b) schematisch ein weiteres Beispiel für den zeitlichen Ablauf eines Modulationsverfahrens, das von einer Ausführungsform der Leuchte mit einem Frequenzumtastungsmodulator ausgeführt werden kann und wobei die Intensität des Beleuchtungslichtanteils durch Pulsweitenmodulation festgelegt wird.

Fig. 7.a) zeigt den zeitlichen Verlauf der Intensität I der LED für einen Beleuchtungslichtanteil I₀ von 50% der maximalen Intensität. Der Beleuchtungslichtanteil ist ein freier Parameter des Modulationsverfahrens und ist hier nur beispielhaft auf den Wert 50% gesetzt. In einer "Idle"-Phase vor und nach dem Senden von codierter Information ist die Intensität des LED-Lichts konstant (DC) 50% der maximalen Intensität. Während dem Senden von Information wird zwischen 0% und 100% der maximalen Intensität hin und her geschaltet, wobei die Pulsbreiten so gewählt sind, dass in 50% der Zeit die Intensität 100% und in 50% der Zeit die Intensität 0% ist. Auf diese Weise ist der Beleuchtungslichtanteil I₀, d.h. die für das Auge erkennbare Beleuchtungswirkung, über die ganze Sequenz hinweg 50% der maximalen Intensität. Für das Senden des Bits "1" wird in diesem Beispiel eine tiefere Modulationsfrequenz (beispielsweise 10 kHz) angewendet als für das Bit "0" (beispielsweise 11 kHz). Fig. 7.b) zeigt die Bitfolge, die im Signal gemäss Fig. 7.a) codiert ist. Vor und nach den gesendeten Bits "1" und "0" schliesst eine "Idle"-Phase an, in der nichts gesendet wird. Die Amplitude ΔI des Kommunikationslichtanteils beträgt hier 100% der maximalen Intensität.

Fig. 8 zeigt in Fig. 8.a) und Fig. 8.b) schematisch ein weiteres Beispiel für den zeitlichen Ablauf eines Modulationsverfahrens, das von einer Ausführungsform der Leuchte mit einem Frequenzumtastungsmodulator ausgeführt werden kann und wobei die Intensität des Beleuchtungslichtanteils durch Pulsweitenmodulation festgelegt wird.

Fig. 8.a) zeigt den zeitlichen Verlauf der Intensität I der LED für einen Beleuchtungslichtanteil I₀ von beispielhaften 75% der maximalen Intensität. Anders als bei dem in Fig. 7 gezeigten Modulationsverfahren wird hier auch während der "Idle"-Phase Pulsweitenmodulation angewendet, allerdings mit einer viel höheren Modulationsfrequenz als für die Codierung der "0"- oder "1"-Bits verwendet wird (beispielsweise 50 kHz). Dabei sind die Pulsbreiten in allen Phasen so gewählt, dass in 75% der Zeit die Intensität 100% und in 25% der Zeit die Intensität 0% ist, sodass eine Intensität I₀ des Beleuchtungslichtanteils von 75% der maximalen Intensität resultiert. Fig. 8.b) zeigt die Bitfolge, die im Signal gemäss Fig. 8.a) codiert ist.

Vor und nach den gesendeten Bits "1" und "0" schliesst eine "Idle"-Phase an, in der nichts gesendet wird. Die Amplitude ΔI des Kommunikationslichtanteils beträgt hier 100% der maximalen Intensität.

Anwendungsbereiche der erfindungsgemässen Leuchten und Leuchten-Systeme sind beispielsweise die Beleuchtung von Tiefgaragen oder grossen Lagerräumen, die nicht permanent ganzflächig beleuchtet werden sollen. Anwendungen in Gebäuden, wo die Beleuchtung auf verfügbares Licht von aussen und auf Anwesenheit von Personen reagieren soll, sind mit den erfindungsgemässen Leuchten-Systemen besonders effizient zu realisieren.

Weiter sind auch Anwendungen denkbar, bei denen die Möglichkeit von Datenübertragung über das Licht eine Rolle spielt. So ist beispielsweise die Anwendung auf Strassenleuchten, Schweinwerfer oder Rücklichter von Autos und Warnlichter von Krankenwagen, etc. denkbar.

### Bezugszeichenliste

10 Leuchte
10', 10" Leuchten im Leuchten-System
11 LED
12 Sensoreinheit
13 Steuereinheit
14 Informationsaufbringeinheit
15 Informationsrückgewinnungseinheit
16 LED-Treibereinheit
17 Sensor
18 Gehäuse
19 Stromversorgung
20 lichtundurchlässiges Element
21 Lichtausgang
22 Ausgangs-LED-Licht
23 empfangener Kommunikationslichtanteil
24 zusätzliche Sensoreinheit
30', 30" Ausgangs-Kommunikationslichtanteil der Leuchte 10
31, 31', 31" beleuchtete Gebiete
40', 40" Ausgangs-Kommunikationslichtanteil der Leuchten 10' resp. 10"
51 Photodiode (PD)
52 Transimpedanzwandler (TIA)
53 Bandpass-Filter
54 Amplitudenbegrenzer (Limiter)
55 Phasenregelschleife (Phase-Locked-Loop, PLL)
56 Tiefpass-Filter
57 Schmitt-Trigger
58 Spitzenwert-Gleichrichter
59 Digitales Voltmeter
f Frequenz
I Lichtintensität
I₀ Lichtintensität des Beleuchtungslichtanteils
ΔI Amplitude des Kommunikationslichtanteils
t Zeit

## Patentansprüche

1. Leuchte (10) mit
- mindestens einer LED (11)
- einem Lichtausgang (21) für Ausgangs-LED-Licht (22) mit einem Beleuchtungslichtanteil und einem Ausgangs-Kommunikationslichtanteil,
- einer für einen empfangenen Kommunikationslichtanteil (23) empfindlichen Sensoreinheit (12),
- einer Informationsaufbringeinheit (14), die ausgangsseitig auf den Kommunikationslichtanteil des Ausgangs-LED-Lichts einwirkt,
- einer Informationsrückgewinnungseinheit (15), die eingangsseitig mit der Sensoreinheit (12) wirkverbunden ist, und
- einer Steuereinheit (13), die ausgangsseitig mit einem Eingang der Informationsaufbringeinheit (14) und eingangsseitig mit einem Ausgang der Informationsrückgewinnungseinheit (15) wirkverbunden ist.

2. Leuchte (10) nach Anspruch 1, wobei die Sensoreinheit (12) gleichzeitig Helligkeitssensor für Umgebungslicht und Empfänger für Kommunikationslicht ist.

3. Leuchte (10) nach Anspruch 1 oder 2, wobei die Informationsrückgewinnungseinheit (15) so ausgebildet ist, dass der Ausgangs-Kommunikationslichtanteil bei der Rückgewinnung übergangen wird.

4. Leuchte (10) nach Anspruch 3, wobei eine zusätzliche, auf Kommunikationslicht empfindliche Sensoreinheit (24) auf die LED (11) gerichtet ist und ausgangsseitig mit der Informationsrückgewinnungseinheit (15) wirkverbunden ist.

5. Leuchte (10) nach einem der vorangehenden Ansprüche, wobei der Ausgang der Informationsaufbringeinheit (14) über eine LED-Treibereinheit (16) mit dem Lichtausgang (21) wirkverbunden ist.

6. Leuchte (10) nach einem der vorangehenden Ansprüche, wobei zumindest die Steuereinheit (13), die Informationsrückgewinnungseinheit (15) und die Informationsaufbringeinheit (14) in einem gemeinsamen Gehäuse (18) angeordnet sind.

7. Leuchte (10) nach einem der vorangehenden Ansprüche, wobei die Steuereinheit (13) einen Mikroprozessor umfasst.

8. Leuchte (10) nach einem der vorangehenden Ansprüche, wobei die Sensoreinheit (12) mindestens eine Photodiode (51), bevorzugt in Kombination mit einem Transimpedanz-Wandler (52), umfasst.

9. Leuchte (10) nach einem der vorangehenden Ansprüche, wobei ein lichtundurchlässiges Element (20) zwischen Sensoreinheit (12) und Lichtausgang (21) vorgesehen ist.

10. Leuchte (10) nach einem der vorangehenden Ansprüche, wobei die Informationsaufbringeinheit (14) als Modulationseinheit für die Amplitudenmodulation von Lichtintensität mit einem modulierten Signal ausgelegt ist und die Informationsrückgewinnungseinheit (15) als Demodulationseinheit für das modulierte Signal ausgelegt ist.

11. Leuchte (10) nach Anspruch 10, wobei die Modulationseinheit einen Frequenzumtastungs-Modulator umfasst und wobei die Demodulationseinheit einen Frequenzumtastungs-Demodulator umfasst.

12. Leuchte (10) nach Anspruch 10, wobei die Modulationseinheit einen Amplitudenumtastungs-Modulator umfasst und wobei die Demodulationseinheit einen Amplitudenumtastungs-Demodulator umfasst.

13. Leuchte (10) nach Anspruch 11, wobei der Frequenzumtastungs-Demodulator in Serieschaltung die Elemente:
- Bandpassfilter (53),
- Amplitudenbegrenzer (54),
- Phasenregelschleife (55),
- Tiefpassfilter (56) und
- Schmitt-Trigger (57)
umfasst.

14. Leuchte (10) nach einem der Ansprüche 1 bis 13, wobei die Leuchte Mittel zur Signalpegelmessung des Kommunikationslichtanteils umfasst.

15. Leuchte (10) nach einem der Ansprüche 1 bis 14, wobei die Leuchte Mittel zur Variation der Intensität des Beleuchtungslichtanteils durch Pulsweitenmodulation umfasst.

16. Leuchte (10) nach einem der vorangehenden Ansprüche, wobei zumindest ein Sensor (17) aus der Liste:
- Bewegungsmelder,
- Präsenzmelder,
- Überfahrschalter,
- Trittmatte,
- Mikrofon,
- Videokamera,
- Helligkeitssensor
mit der Steuereinheit (13) wirkverbunden ist.

17. Leuchte (10) nach einem der vorangehenden Ansprüche, wobei die Leuchte Mittel zum Empfangen und/oder Senden von Daten über ein drahtgebundenes Netzwerk und/oder über Funkverbindung umfasst.

18. Leuchten-System (100) umfassend mindestens zwei Leuchten (10, 10', 10") nach einem der Ansprüche 1 bis 17, wobei der Kommunikationslichtanteil im Ausgangs-LED-Licht einer ersten Leuchte (10) der empfangene Kommunikationslichtanteil mindestens einer anderen Leuchte (10', 10") ist.

19. Leuchten-System (100) nach Anspruch 18, wobei der Ausgangs-Kommunikationslichtanteil im Ausgangs-LED-Licht der anderen Leuchte (10', 10") der empfangene Kommunikationslichtanteil der ersten Leuchte (10) ist.

20. Verfahren zum Betrieb eines Leuchten-Systems (100) nach Anspruch 18, wobei in der ersten Leuchte (10) des Leuchten-Systems
a) Statusinformationen der Steuereinheit bevorzugt in Form digitaler Signale an die Informationsaufbringeinheit übermittelt und im Ausgangs-Kommunikationslichtanteil ausgesendet werden.

21. Verfahren zum Betrieb eines Leuchten-Systems (100) nach Anspruch 18, wobei in den anderen Leuchten (10', 10") des Leuchten-Systems
b) Information aus am Ausgang des Sensors auftretenden Signale rückgewonnen und von der Steuereinheit verarbeitet wird und
c) auf Grundlage der rückgewonnenen Information die Helligkeit des Beleuchtungslichtanteils vergrössert, verkleinert oder konstant gehalten wird.

22. Verfahren zum Betrieb eines Leuchten-Systems (100) nach Anspruch 19, wobei in Leuchten (10, 10', 10") des Leuchten-Systems
a) Statusinformationen der Steuereinheit bevorzugt in Form digitaler Signale an die Informationsaufbringeinheit übermittelt und im Ausgangs-Kommunikationslichtanteil ausgesendet werden,
b) Information aus am Ausgang des Sensors auftretenden Signale rückgewonnen und von der Steuereinheit verarbeitet wird und
c) auf Grundlage der rückgewonnenen Information die Helligkeit des Beleuchtungslichtanteils vergrössert, verkleinert oder konstant gehalten wird.

23. Verfahren nach Anspruch 21 oder 22, wobei im Schritt b) eine Signalpegelmessung an den rückgewonnenen Signalen durchgeführt wird und der ermittelte Signalpegel in ein Mass für eine Distanz zu einer Leuchte, welche die Quelle der rückgewonnenen Signale ist, übersetzt wird.

24. Verfahren nach einem der Ansprüche 21 oder 22, wobei im Schritt b) am Ausgang der Sensoreinheit auftretende Signale demoduliert und in digitale Signale umgewandelt werden.

25. Verfahren nach Anspruch 24, wobei im Schritt b) eine Messung eines Bit-Jitters an den digitalen Signalen durchgeführt wird und der ermittelte Bit-Jitter in ein Mass für eine Distanz zu einer Leuchte, welche die Quelle der rückgewonnenen Signale ist, übersetzt wird.

26. Verfahren nach einem der Ansprüche 20 bis 25, wobei durch Anwendung mindestens eines der Verfahren
- Frequenzmultiplexverfahren,
- Codemultiplexververfahren,
- synchrones oder asynchrones Zeitmultiplexverfahren Kommunikationskanäle zwischen je einem Paar von Leuchten im Leuchten-System etabliert werden.

27. Verfahren nach einem der Ansprüche 20 bis 26, wobei Leuchten (10, 10', 10") im Leuchten-System (100) über ein drahtgebundenes Netzwerk und/oder über Funkverbindung Daten empfangen und/oder senden.
